# EUROPEAN PATENT SPECIFICATION

(11) **EP 4 430 993 B1**
(45) Date of publication and mention of the grant of the patent: **11.02.2026**
(21) Application number: 24162128.3
(22) Date of filing: 07.03.2024
(51) Int. Cl.: A47J 31/44

(54) **STEAM DISPENSING APPARATUS AND COFFEE MACHINE THEREOF**
DAMPFVORRICHTUNG UND KAFFEEMASCHINE
APPAREIL DE DISTRIBUTION DE VAPEUR ET MACHINE À CAFÉ

(30) Priority: 08.03.2023 IT 202300004275
(43) Date of publication of application: 18.09.2024
(73) Proprietor: Cimbali Group S.p.A., 20082 Binasco (MI) (IT)
(72) Inventor: Mosconi, Claudio, Binasco MI (IT); Galimberti, Alberto, Binasco MI (IT); Grassini, Matteo, Binasco MI (IT)
(74) Representative: Perani & Partners S.p.A.

(56) References cited:
- US-A- 4 852 474
- US-A1- 2018 368 610
- US-A1- 2020 107 673

## Description

### Technical Field

The present invention concerns an apparatus for dispensing steam usable, for example, for heating and frothing milk.

The present invention also concerns a coffee machine comprising such apparatus for dispensing steam which finds useful use, for example, in bars, restaurants and canteens for preparing coffee-flavoured beverages.

### State of the art

Milk is one of the basic foodstuffs for making many beverages such as for example cappuccino or caffè macchiato. As is well known, for the preparation of the latter it is required to heat and froth a portion of milk, placed in a special container, using a steam jet.

To carry out these operations, the bartender uses a coffee machine for professional use that comprises a pressurised steam generator fluid-dynamically connected to a steam dispensing lance. Between the steam generator and the lance there is interposed a tap that allows the bartender to regulate the flow rate of the steam flow dispensed.

It should be noted that for milk frothing, as well as for preparing chocolates or infusions and the like, the injection of the steam by means of the dispensing lance must take place in such a way that the increase in temperature of the edible liquid is not too sudden and reaches the optimal temperature of the beverage according to a predetermined time.

This means that the amount of steam, necessary for heating the liquid, must be supplied according to defined amounts. In fact, if the flow rate of the dispensing steam is too high, the edible liquid reaches the boiling temperature in a short time and, in the case of milk, this prevents the formation of a shiny and compact milk foam. If, on the other hand, the flow rate of the steam is too low, the time required for the preparation of the beverage would be too high and would hardly be accepted by the consumer.

The use of such a tap for the regulation of the steam flow represents the simplest and most economical solution, however, it entails several drawbacks.

First of all, the tap does not allow to regulate the flow precisely. In use, the bartender is therefore forced to repeatedly manoeuvre the tap until the steam jet reaches the flow rate that he or she estimates to be the desired one. The rapid and correct regulation of the steam flow therefore requires a certain experience in using the specific machine, regardless of the degree of training of the operator.

In addition, to stop the steam flow, the operator must return the tap into the closed state. This operation is often carried out in an energetic way, generating wear of the sealing gaskets present in the device which, therefore, must be periodically replaced causing machine downtime.

To overcome this last drawback, some manufacturers have preferred to replace the tap with an ON/OFF type solenoid valve. In this way, the steam flow is activated or interrupted by driving the solenoid valve with an appropriate button. Other solutions have instead provided that the solenoid valve, once manually driven, is automatically deactivated by the control board of the coffee machine, alternatively after a certain time from the activation of the same or after having performed an appropriate work cycle.

For example, documents EP3364833 and EP2070456 describe apparatuses for dispensing steam comprising an ON/OFF type steam shut-off solenoid valve and a manual flow regulator arranged downstream of the solenoid valve. The solenoid valve activates or not the steam dispensing while the flow regulator allows the bartender to manually regulate the flow rate of the steam flow dispensed.

### Problems of the background art

Although the technical solutions described in documents EP3364833 and EP2070456 make it possible to overcome the problem of wear of the gaskets due to dispensing interruption, they do not provide a solution to the difficulty in regulating the flow rate dispensed. In use, in fact, the bartender must still proceed through attempts in order to find the position of the flow regulator that allows to have the desired steam flow rate.

US2018/368610 describes an apparatus for dispensing steam comprising a shutter to act on the steam flow and regulating members to regulate the flow rate of the steam flow wherein the shutter comprises a first and second regulating position and the regulating members are configured to switch the shutter between the first and second operating position in which the steam flow crosses respectively the first and second regulating position.

The present invention seeks to provide an alternative way to regulate the steam flow

### SUMMARY OF THE INVENTION

In this context, the task of the person skilled in the art at the basis of the present invention is to propose an apparatus for dispensing steam and a coffee machine comprising such apparatus which overcome the drawbacks of the above mentioned prior art.

In particular, it is an object of the present invention to make available an apparatus for dispensing steam with simple and economical construction that allows the operator to easily and quickly obtain the correct regulation of the flow rate of the steam flow.

It is also an object of the present invention to make available an apparatus for dispensing steam that allows the operator to use a replicable modus operandi in order to obtain the correct regulation of the flow rate of the steam flow depending on the beverage to be prepared.

It is also an object of the present invention to make available a reliable coffee machine with simple construction.

In particular, it is an object of the present invention to make available a coffee machine capable of minimizing the maintenance operations necessary to ensure the correct operation thereof.

### Advantages of the invention

The dispensing apparatus subject-matter of the present invention comprises a regulating group configured to receive a steam flow, regulate its flow rate, and supply it to a dispensing device.

In detail, the regulating group comprises a shutter adapted to act on the steam flow to define its flow rate, and regulating members which, by acting on the shutter, regulate the flow rate of the steam flow.

The shutter comprises at least a first and a second regulating opening respectively configured to impose a first and a second flow rate value to the flow.

The regulating members are configured to switch the shutter between at least a first operating position in which the steam flow crosses the first regulating opening assuming the first flow rate value, and a second operating position in which the steam flow crosses the second regulating opening assuming the second flow rate value.

In use, depending on the desired flow rate of the steam flow, it is sufficient for the operator to select the position of the shutter associated therewith. It is therefore evident that the apparatus subject-matter of the present invention allows to carry out a rapid and precise regulation of the flow rate of the steam flow, in particular, regardless of the degree of training of the operator.

It should also be noted that the apparatus subject-matter of the present invention allows the operator to use a replicable modus operandi in order to obtain the correct regulation of the flow rate of the steam flow depending on the beverage to be prepared. For example, to froth the milk the operator must always bring the shutter into the first operating position, while to heat the water for the infusions the operator must always bring the shutter into the second operating position.

It is also an object of the present invention a coffee machine comprising a steam generator configured to generate a steam flow, the aforementioned apparatus for dispensing steam, and a hydraulic circuit adapted to put the steam generator and the apparatus in fluid communication.

The coffee machine further comprises a valve means arranged along the hydraulic circuit between the steam generator and the apparatus. The valve means is switchable between an open configuration in which it allows the supply of the steam flow from the steam generator to the apparatus, and a closed configuration in which it interrupts the supply of the steam flow from the steam generator to the apparatus.

The valve means allows to interrupt the steam dispensing without acuating, and hence wearing, the components of the dispensing group such as, for example, any sealing elements arranged therein. Therefore, the present invention allows to make available a coffee machine capable of reducing the frequency of maintenance operations without affecting reliability.

### LIST OF FIGURES

Further characteristics and advantages of the present invention will become more apparent from the indicative, and therefore non-limiting, description of an apparatus for dispensing steam and a coffee machine comprising such apparatus, as illustrated in the attached drawings in which:
- Figure 1 shows a side sectional view of an apparatus for dispensing steam according to the present invention,
- Figure 2 shows an exploded view of the apparatus of Figure 1,
- Figure 3 shows a side sectional view of some components of the apparatus of Figure 1,
- Figure 4a shows a sectional view of the components of Figure 3 sectioned along the plane A-A and represented in a first configuration of use,
- Figure 4b shows a sectional view of the components of Figure 3 sectioned along the plane A-A and represented while switching from the first configuration of use to a second configuration of use,
- Figure 5 shows a diagram of a coffee machine according to the present invention.

### DETAILED DESCRIPTION

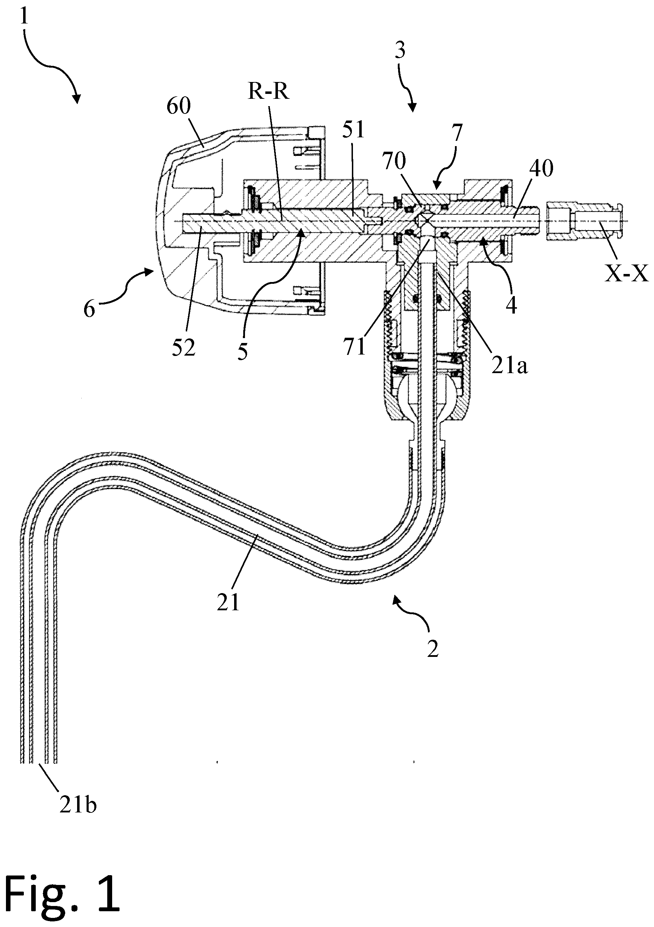

With reference to figures 1-4, the present invention has as its object an apparatus 1 for dispensing steam usable for operations of milk frothing or heating of beverages such as, for example, chocolates and herbal teas.

The apparatus 1 comprises a dispensing device 2 configured to dispense steam into a container R containing an edible liquid to be heated or frothed.

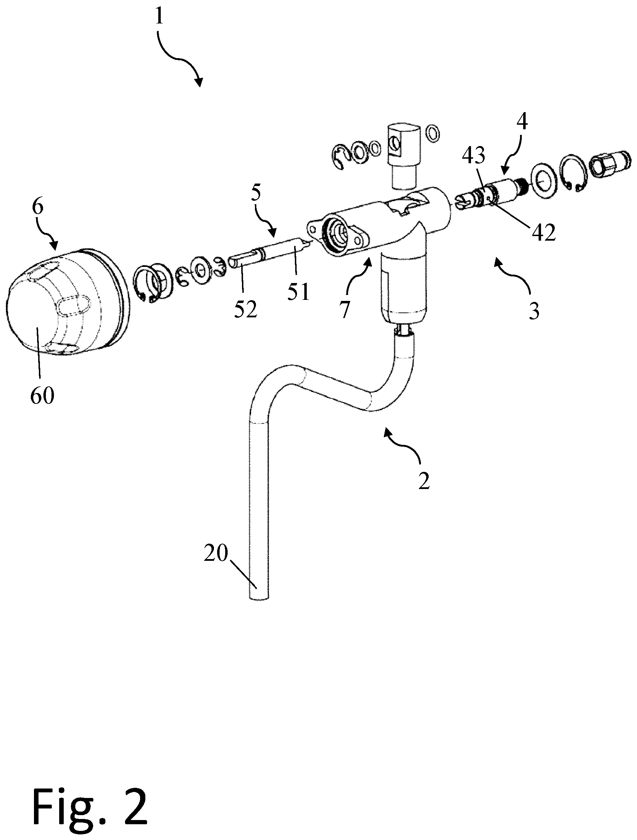

In the embodiment shown in figures 1 and 2, the dispensing device 2 is a dispensing lance, i.e. a device for coffee machines configured to be partially immersed in an edible liquid and dispense a steam flow or an air-steam mixture.

For the sake of simplicity, in the following the term "steam flow" is used to refer indistinctly to a flow of steam only or to a flow of air-steam mixture.

Again with reference to the embodiment shown in figures 1 and 2, the dispensing device 2 comprises a conduit 21, made for example of FEP or PTFE, having an inlet 21a configured to receive a steam flow and an outlet 21b adapted to dispense the steam flow into the container R.

The apparatus 1 further comprises a regulating group 3 arranged upstream of the dispensing device 2. The regulating group 3 therefore precedes the dispensing device 2 along the path travelled by the steam flow so as to be able to regulate the properties thereof before dispensing.

The regulating group 3 is configured to receive the steam flow from a steam generator C, regulate the flow rate of the steam flow, and supply the steam flow to the dispensing device 2.

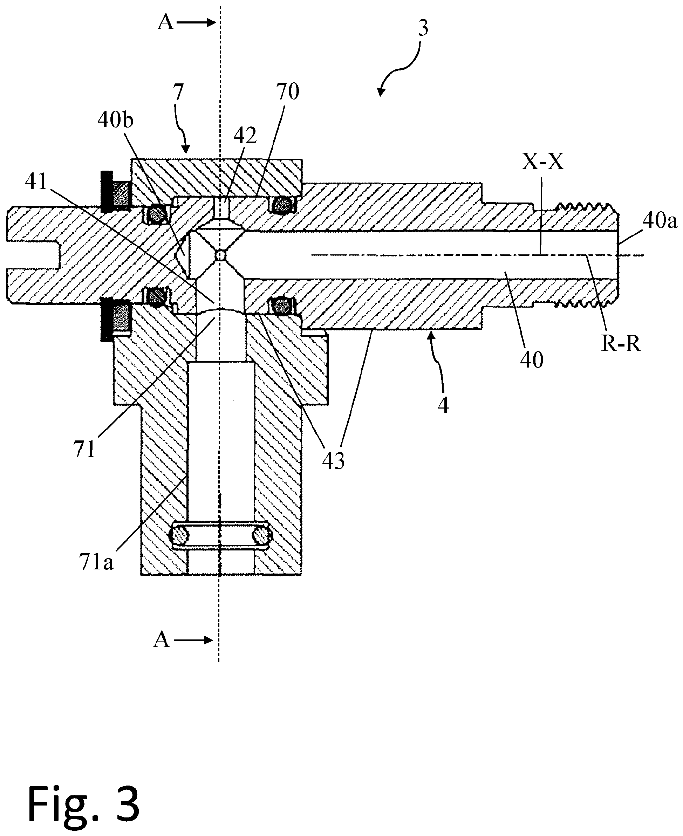

According to one aspect, the regulating group 3 comprises a discharge opening 71 fluid-dynamically associated with the inlet 21a of the conduit 21 of the dispensing device by means of connecting elements. For example, in the embodiment shown in figure 2 and detailed in figure 3, the regulating group 3 comprises a discharge channel 71a inside which the conduit 21 is partially insertable with interference.

In detail, the regulating group 3 comprises a shutter 4 configured to act on the steam flow to define its flow rate.

Preferably, the shutter 4 interacts directly on the steam flow, i.e. it is located along the fluid-dynamic path travelled by the steam flow.

It should be specified that in the context of the present invention the term "flow rate" is used to indicate indifferently the volumetric flow rate and the mass flow rate. Wherein the volumetric flow rate is the physical quantity that indicates the volume of fluid flowing per unit time, while the mass flow rate is the physical quantity that indicates the mass of fluid flowing per unit time.

With reference to figure 3, the shutter 4 comprises at least a first and a second regulating opening 41, 42 configured to impose different flow rate values to the steam flow under the same conditions upstream of the shutter 4.

In particular, the first regulating opening 41 is configured to impose a first flow value P1 to the steam flow, while the second regulating opening 42 is configured to impose a second flow value P2 to the steam flow which, under the same conditions as the flow entering the regulating group 3, is different from the first flow value P1.

Preferably, the first and the second regulating opening 41, 42 are configured to generate different concentrated pressure drops.

According to one aspect, the first regulating opening 41 and the second regulating opening 42 have different passage sections so as to generate different concentrated pressure drops.

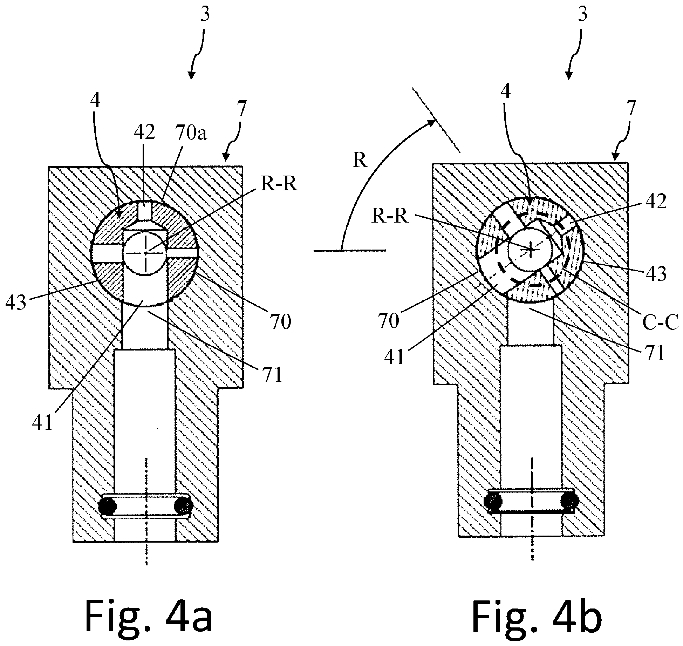

In the embodiment shown in figures 3, 4a and 4b, the first and the second regulating opening 41, 42 have a different surface extension of the passage section. In other words, the first and the second regulating opening 41, 42 define different passage gaps for the steam flow.

In alternative embodiments, the first and the second regulating opening 41, 42 have different geometric shapes having a different fluid-dynamic interaction with the steam flow. For example, the first regulating opening 41 may have a circular/oval section, while the second regulating opening may have a quadrangular shape.

The shutter 4 may comprise more than two regulating openings, for example, in the embodiment shown in figures 4a and 4b the shutter 4 comprises four regulating openings configured to impose four different flow rate values to the flow.

Again with reference to the embodiment shown in figures 4a and 4b, at least one of the regulating openings is geometrically identical to the discharge opening.

In the following, for the sake of simplicity, reference will be made to the embodiment with two regulating openings. However, the foregoing shall likewise apply to the embodiments having more than two regulating openings.

Preferably, the shutter 4 comprises a cavity 40 accessible by means of an inlet opening 40a. In other words, the shutter 4 is a hollow body.

With reference to figure 3, the cavity 40 is placed in fluid communication with the first and the second regulating opening 41, 42 so that the steam flow entering it by means of the inlet opening 40a can escape through the regulating openings 41, 42.

The cavity 40 has an axis X extending along a longitudinal direction X-X.

Preferably, the cavity 40 extends along the axis X between the inlet opening 40a and a closed bottom 40b, and the first and the second regulating opening 41, 42 are interposed along the longitudinal direction X-X between the inlet opening 40a and the closed bottom 40b.

Furthermore, preferably, the first and the second regulating opening 41, 42 extend transversely to the longitudinal direction X-X forming respective regulating channels.

In the embodiment shown in figures 3, 4a and 4b, the shutter 4 has an outer surface 43 which, preferably, is axially symmetrical with respect to the axis X of the cavity 40.

Furthermore, again with reference to the embodiment of figures 3, 4a and 4b, the first and the second regulating opening 41, 42 extend transversely to the longitudinal direction X-X from the outer surface 43 to the cavity 40. In other words, the aforementioned regulating channels extend in the shutter 4 from the outer surface 43 to the cavity 40.

Preferably, the first and the second regulating opening 41, 42 extend radially with respect to the axis X of the cavity 40. Thus, in use, the steam flow enters the cavity axially through the inlet opening 40a and leaves it radially through the regulating openings 41, 42.

According to one aspect shown in figures 4a and 4b, the first and the second regulating opening 41, 42 are arranged around the axis X of the cavity 40.

In particular, if the outer surface 43 has an axially symmetrical geometry, the first and the second regulating opening 41, 42 are arranged along a circumferential direction C-C on the outer surface 43 around the axis X of the cavity 40.

The regulating group 3 further comprises regulating members 5, 6 configured to act on the shutter 4 to regulate the flow rate of the steam flow.

In detail, the regulating members 5, 6 are configured to switch the shutter between at least a first operating position (fig. 4a) in which the steam flow crosses the first regulating opening 41 assuming the first flow rate value P1, and a second operating configuration in which the steam flow crosses the second regulating opening 42 assuming the second flow rate value P2.

According to one aspect, the regulating group 3 comprises a main body 7 having a seat 70 configured to accommodate the shutter 4. Therefore, the shutter 4 is at least partially mounted inside the main body 7.

The main body 7 comprises the aforementioned discharge opening 71 and, preferably, the connecting elements that fluid-dynamically associate the discharge opening 71 to the inlet 21a of the conduit 21 of the dispensing device 2.

To regulate the flow rate of the steam flow, preferably, the regulating members 5, 6 are configured to move the shutter 4 inside the seat 70 of the main body 7, so as to modify the mutual position of the regulating openings 41, 42 with respect to the discharge opening 71.

It should be noted that by modifying the mutual position of the regulating openings 41, 42 with respect to the discharge opening 71, the regulating members 5, 6 switch the shutter 4 between the operating positions.

According to a possible embodiment, in the first operating position the first regulating opening 41 is placed in fluid communication with the discharge opening 71 and the second regulating opening 42 is blocked by the main body 7, while in the second operating position the second regulating opening 42 is placed in fluid communication with the discharge opening 71 and the first regulating opening is blocked by the main body 7.

Preferably, in the first operating position the first regulating opening 41 is aligned with the discharge opening 71 and the second regulating opening 42 is closed by an inner wall 70a of the main body 7 delimiting the seat 70, while in the second operating position the second regulating opening 42 is aligned with the discharge opening 71 and the first regulating opening 41 is closed by the inner wall 70a.

It should be specified that in the context of the present description two openings are considered aligned when the respective axes are coincident.

According to one embodiment, the regulating members 5, 6 are configured to place the shutter 4 in rotation within the seat 7 around a regulation axis R-R.

In detail, with reference to Figure 4b, the regulating members 5, 6 are configured to drive the rotation of the shutter 4 around the regulation axis R-R (arrow R) so as to sequentially associate the regulating openings 41, 42 to the discharge opening 71. In other words, the shutter 4 by rotating around the regulation axis R-R on command of the regulating members 5, 6 sequentially places the regulating openings 41, 42 in fluid communication with the discharge opening 71.

If the regulating members 5, 6 are configured to place the shutter 4 in rotation within the seat, it is particularly advantageous to arrange the regulating openings 41, 42 on the outer surface 43 of the shutter 4 along the circumferential direction C-C at different angular positions.

Alternatively, it is possible to arrange the regulating openings in succession along the longitudinal direction X-X and configure the regulating members 5, 6 to move the shutter 4 by rotational-translational motion within the cavity 70.

The regulation axis R-R is preferably directed along the longitudinal direction X-X. In other words, the regulation axis R-R is coincident with the axis X of the cavity 70.

With reference to the embodiment of figure 1, the regulating members 5, 6 comprise a regulating shaft 5 configured to be kinematically connected to the shutter 4 to move it within the cavity 70.

In particular, preferably, the regulating shaft 5 extends along the longitudinal direction X-X between a first end 51 connected to the shutter 4 and a second end 52 connected to drive means 6.

In the embodiment of figures 1 and 2, the drive means 6 comprise a knob 60 mounted on the second end 52 of the regulating shaft 5. The operator, by acting manually on the knob, moves the shutter 4 to regulate the flow rate of the flow in accordance with the above. For example, according to one embodiment, the operator rotates the knob 60 which, through the regulating shaft 5, drives the shutter 4 in rotation around the regulation axis R-R to switch it between the operating positions.

In alternative embodiments, the drive means 6 are of the electromechanical type and comprise an electric motor (not shown in the figures) configured to act on the second end 52 of the regulating shaft 5 to switch the shutter 4 between the operating positions. In these alternative embodiments, the operator controls the drive means 6 through a control interface (not shown in the figures) which may comprise a touch screen and/or a series of physical buttons.

It is also an object of the present invention a coffee machine 100 comprising a steam generator C configured to generate a steam flow. The steam generator C can be of the conventional type, comprising in this case a water/water steam mixture, or it can be of the so-called flash heater type.

The coffee machine 100 further comprises the apparatus 1 for dispensing steam described above, and a hydraulic circuit 8 configured to place the steam generator C in fluid communication with the apparatus 1.

In use, the apparatus 1 receives a steam flow from the steam generator C, regulates the flow rate of the steam flow, and dispenses the steam flow into the container R.

The coffee machine 100 also comprises a valve means 9, for example a solenoid valve, arranged along the hydraulic circuit between the steam generator and the apparatus 1.

The valve means 9 is configured to allow to selectively supply the steam flow from the steam generator C to the apparatus 1. In particular, the valve means 9 is switchable between an open configuration in which it allows the supply of the steam flow from the steam generator C to the apparatus 1, and a closed configuration in which it interrupts the supply of the steam flow from the steam generator C to the apparatus 1.

It should be noted that the valve means 9 allows the steam dispensing to be interrupted without driving, and therefore wearing out, the components of the apparatus 1, in particular the regulating group 3. Therefore, advantageously, the coffee machine 100 subject-matter of the present invention does not need frequent maintenance operations aimed at replacing the worn components of the apparatus 1.

According to one embodiment, the coffee machine 100 comprises a control unit 10 placed in signal communication with the regulating group 3 and with the valve means 9.

In detail, the control unit 10 is placed in signal communication with the regulating group 3 to detect the operating position in which the shutter is located and/or to electronically control the operating position of the shutter, for example, by means of the drive means 6 of the electromechanical type.

The control unit 10 is also placed in signal communication with the valve means 9 to switch it between the open and closed configuration.

Preferably, the control unit 10 is configured to switch the valve means 9 into the open position when the operator sends a drive signal by means of the control interface of the drive means 6.

According to one embodiment, the knob 60 is connected to a switching device (not shown in the figures), for example a micro-switch, which is placed in signal communication with the control unit 10 to switch the valve means 9 between the open and closed position. The switching device is, for example, activatable by turning or pressing the knob 60 itself.

According to a further embodiment, the knob 60 is placed in signal connection with the control unit 10 in order to switch the valve means 9 between the open and closed position. This type of knob, so-called of the smart type, is known to the person skilled in the art in the sector and will not be described further.

Preferably, said smart type knob is provided with a display configured to provide the operator with information relating to the steam dispensing.

Furthermore, preferably, the smart type knob is configured to return to the user a tactile sensation such as, for example, the sensation of a click rotation, following driving it, whether it is by rotation or by pressing it.

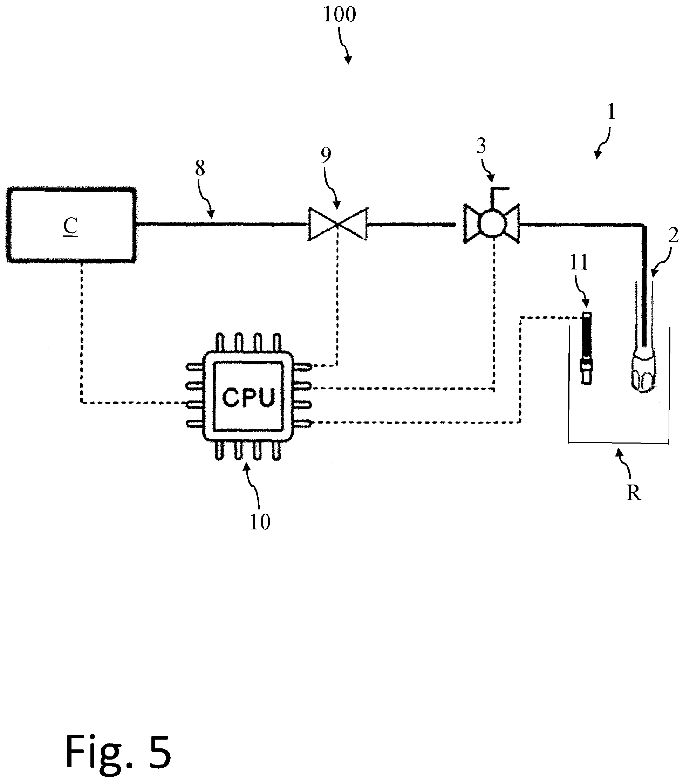

With reference to figure 5, preferably, the coffee machine 100 comprises a sensor 11 placed in signal communication with the control unit 10 and adapted to detect the temperature of the edible liquid stored in the container R. Said sensor 11 can be a contact or proximity sensor.

Preferably, the control unit 10 is configured to regulate the flow rate of the steam flow by acting on the regulating members 3 of the apparatus 1 depending on the temperature detected by the sensor 11.

It should be specified that the coffee machine 100 also comprises all the typical components of a coffee machine - such as, for example, the coffee dispensing group, the water pump and others - which have not been described as being known to the person skilled in the art.

## Claims

1. Apparatus (1) for dispensing steam comprising:
- a dispensing device (2) configured to dispense steam into a container (R) containing an edible liquid,
- a regulating group (3) arranged upstream of the dispensing device (2) and configured to receive a steam flow, regulate the flow rate of the steam flow, and supply the steam flow to the dispensing device (2), the regulating group (3) comprising:
- a shutter (4) configured to act on the steam flow to define the flow rate of the steam flow,
- regulating members (5, 6) configured to act on the shutter (4) to regulate the flow rate of the steam flow, wherein
- the shutter (4) comprises at least a first regulating opening (41) and a second regulating opening (42) respectively configured to impose a first flow rate value (P1) and a second flow rate value (P2) to the steam flow, the first flow rate value (P1) being different from the second flow rate value (P2),
- the regulating members (5, 6) are configured to switch the shutter (4) between at least a first operating position in which the steam flow crosses the first regulating opening (41) assuming the first flow rate value (P1), and a second operating position in which the steam flow crosses the second regulating opening (42) assuming the second flow rate value (P2).

2. Apparatus (1) according to claim 1, wherein the first regulating opening (41) and the second regulating opening (42) have a different passage section.

3. Apparatus (1) according to claim 1 or 2, wherein the shutter (4) comprises a cavity (40), accessible by means of an inlet opening (40a), placed in fluid communication with the first and the second regulating opening (41, 42).

4. Apparatus (1) according to claim 3, wherein:
- the cavity (40) has an axis (X) extending along a longitudinal direction (X-X),
- the first and the second regulating opening (41, 42) extend transversely to the longitudinal direction (X-X).

5. Apparatus (1) according to claim 4, wherein:
- the shutter has an outer surface (43),
- the first regulating opening (41) and the second regulating opening (42) extend transversely with respect to the longitudinal direction (X-X) from the outer surface (43) to the cavity (40).

6. Apparatus (1) according to claim 4 or 5 wherein the first and the second regulating opening (41, 42) are arranged around the axis (X) of the cavity (40).

7. Apparatus (1) according to any one of the preceding claims, wherein:
- the regulating group (3) comprises a main body (7) having a seat (70) configured to accommodate the shutter (4), and a discharge opening (71) placed in fluid communication with the dispensing device (2),
- the regulating members (5, 6) are configured to move the shutter (4) inside the seat (70) of the main body (7) to modify the mutual position of the first and the second regulating opening (41, 42) with respect to the discharge opening (71).

8. Apparatus (1) according to claim 7, wherein:
- in the first operating position the first regulating opening (41) is placed in fluid communication with the discharge opening (71) and the second regulating opening (42) closed by the main body (7),
- in the second operating position the second regulating opening (42) is placed in fluid communication with the discharge opening (71) and the first regulating opening (41) closed by the main body (7).

9. Apparatus (1) according to claim 7 and 8, wherein the regulating members (5, 6) are configured to place the shutter (4) in rotation within the seat (7) about a regulation axis (R-R).

10. Coffee machine (100) comprising:
- a steam generator (C) configured to generate a steam flow,
- an apparatus (1) for dispensing steam according to any one of the preceding claims, the apparatus (1) being configured to receive the steam flow from the steam generator (C), regulate the flow rate of said steam flow, and dispense the steam flow into a container (R) containing an edible liquid,
- a hydraulic circuit (8) configured to put the steam generator (C) in fluid communication with the apparatus (1),
- a valve means (9) arranged along the hydraulic circuit (8) between the steam generator (C) and the apparatus (1), the valve mean (9) being switchable between an open configuration in which allows the supply of the steam flow from the steam generator (C) to the apparatus (1), and a closed configuration in which interrupts the supply of the steam flow from the steam generator (C) to the apparatus (1).

11. Coffee machine (100) according to claim 10, comprising a control unit (10) placed in signal communication with:
- the regulating group (3) for electronically commanding the operating position of the shutter (4) so as to regulate the flow rate of the steam dispensed by the dispensing device (2),
- the valve means (9) for switching the valve means (9) between the open and closed configuration.

## Patentansprüche

1. Vorrichtung (1) zur Dampfabgabe, umfassend:
∘ eine Abgabevorrichtung (2), die dazu konfiguriert ist, Dampf in einen Behälter (R) abzugeben, der eine essbare Flüssigkeit enthält,
∘ eine Regulierungsgruppe (3), die stromaufwärts der Abgabevorrichtung (2) angeordnet und dazu konfiguriert ist, einen Dampfstrom aufzunehmen, die Durchflussrate des Dampfstroms zu regulieren und den Dampfstrom der Abgabevorrichtung (2) zuzuführen, wobei die Regulierungsgruppe (3) umfasst:
▪ einen Verschluss (4), der dazu konfiguriert ist, auf den Dampfstrom einzuwirken, um die Durchflussrate des Dampfstroms zu definieren,
▪ Regulierungselemente (5, 6), die dazu konfiguriert sind, auf den Verschluss (4) einzuwirken, um die Durchflussrate des Dampfstroms zu regulieren, wobei
∘ der Verschluss (4) mindestens eine erste Regulierungsöffnung (41) und eine zweite Regulierungsöffnung (42) umfasst, die jeweils dazu konfiguriert sind, dem Dampfstrom einen ersten Durchflussratenwert (P1) und einen zweiten Durchflussratenwert (P2) aufzuerlegen, wobei sich der erste Durchflussratenwert (P1) von dem zweiten Durchflussratenwert (P2) unterscheidet,
∘ die Regulierungselemente (5, 6) dazu konfiguriert sind, den Verschluss (4) zwischen mindestens einer ersten Betriebsposition, in der der Dampfstrom die erste Regulierungsöffnung (41) durchquert und dabei den ersten Durchflussratenwert (P1) annimmt, und einer zweiten Betriebsposition, in der der Dampfstrom die zweite Regulierungsöffnung (42) durchquert und dabei den zweiten Durchflussratenwert (P2) annimmt, umzuschalten.

2. Vorrichtung (1) nach Anspruch 1, wobei die erste Regulierungsöffnung (41) und die zweite Regulierungsöffnung (42) einen unterschiedlichen Durchgangsquerschnitt aufweisen.

3. Vorrichtung (1) nach Anspruch 1 oder 2, wobei der Verschluss (4) einen Hohlraum (40) umfasst, der mittels einer Einlassöffnung (40a) zugänglich ist und in Fluidverbindung mit der ersten und der zweiten Regulierungsöffnung (41, 42) steht.

4. Vorrichtung (1) nach Anspruch 3, wobei:
∘ der Hohlraum (40) eine Achse (X) aufweist, die sich entlang einer Längsrichtung (X-X) erstreckt,
∘ die erste und die zweite Regulierungsöffnung (41, 42) sich quer zur Längsrichtung (X-X) erstrecken.

5. Vorrichtung (1) nach Anspruch 4, wobei:
∘ der Verschluss (4) eine Außenfläche (43) aufweist,
o sich die erste Regulierungsöffnung (41) und die zweite Regulierungsöffnung (42) quer zur Längsrichtung (X-X) von der Außenfläche (43) zum Hohlraum (40) erstrecken.

6. Vorrichtung (1) nach Anspruch 4 oder 5, wobei die erste und die zweite Regulierungsöffnung (41, 42) um die Achse (X) des Hohlraums (40) herum angeordnet sind.

7. Vorrichtung (1) nach einem der vorhergehenden Ansprüche, wobei:
∘ die Regulierungsgruppe (3) einen Hauptkörper (7) mit einem Sitz (70), der dazu konfiguriert ist, den Verschluss (4) aufzunehmen, und eine Auslassöffnung (71), die in Fluidverbindung mit der Abgabevorrichtung (2) steht, umfasst,
∘ die Regulierungselemente (5, 6) dazu konfiguriert sind, den Verschluss (4) innerhalb des Sitzes (70) des Hauptkörpers (7) zu bewegen, um die gegenseitige Position der ersten und der zweiten Regulierungsöffnung (41, 42) in Bezug auf die Auslassöffnung (71) zu verändern.

8. Vorrichtung (1) nach Anspruch 7, wobei:
o in der ersten Betriebsposition die erste Regulierungsöffnung (41) in Fluidverbindung mit der Auslassöffnung (71) steht und die zweite Regulierungsöffnung (42) durch den Hauptkörper (7) verschlossen ist,
∘ in der zweiten Betriebsposition die zweite Regulierungsöffnung (42) in Fluidverbindung mit der Auslassöffnung (71) steht und die erste Regulierungsöffnung (41) durch den Hauptkörper (7) verschlossen ist.

9. Vorrichtung (1) nach Anspruch 7 und 8, wobei die Regulierungselemente (5, 6) dazu konfiguriert sind, den Verschluss (4) innerhalb des Sitzes (7) um eine Regulierungsachse (R-R) in Drehung zu versetzen.

10. Kaffeemaschine (100), umfassend:
∘ einen Dampferzeuger (C), der dazu konfiguriert ist, einen Dampfstrom zu erzeugen,
∘ eine Vorrichtung (1) zur Dampfabgabe nach einem der vorhergehenden Ansprüche, wobei die Vorrichtung (1) dazu konfiguriert ist, den Dampfstrom von dem Dampferzeuger (C) aufzunehmen, die Durchflussrate des Dampfstroms zu regulieren und den Dampfstrom in einen Behälter (R) abzugeben, der eine essbare Flüssigkeit enthält,
∘ einen Hydraulikkreislauf (8), der dazu konfiguriert ist, den Dampferzeuger (C) mit der Vorrichtung (1) in Fluidverbindung zu bringen,
∘ ein Ventilmittel (9), das entlang des Hydraulikkreislaufs (8) zwischen dem Dampferzeuger (C) und der Vorrichtung (1) angeordnet ist, wobei das Ventilmittel (9) zwischen einer offenen Konfiguration, in der es die Zufuhr des Dampfstroms von dem Dampferzeuger (C) zu der Vorrichtung (1) ermöglicht, und einer geschlossenen Konfiguration, in der es die Zufuhr des Dampfstroms von dem Dampferzeuger (C) zu der Vorrichtung (1) unterbricht, umschaltbar ist.

11. Kaffeemaschine (100) nach Anspruch 10, umfassend eine Steuereinheit (10), die in Signalverbindung steht mit:
∘ der Regulierungsgruppe (3) zum elektronischen Ansteuern der Betriebsposition des Verschlusses (4), um so die Durchflussrate des von der Abgabevorrichtung (2) abgegebenen Dampfes zu regulieren,
∘ dem Ventilmittel (9) zum Umschalten des Ventilmittels (9) zwischen der offenen und der geschlossenen Konfiguration.

## Revendications

1. Appareil (1) de distribution de vapeur comprenant :
- un dispositif de distribution (2) configuré pour distribuer de la vapeur dans un récipient (R) contenant un liquide comestible,
- un groupe de régulation (3) agencé en amont du dispositif de distribution (2) et configuré pour recevoir un flux de vapeur, réguler le débit du flux de vapeur, et fournir le flux de vapeur au dispositif de distribution (2), le groupe de régulation (3) comprenant :
- un obturateur (4) configuré pour agir sur le flux de vapeur afin de définir le débit du flux de vapeur,
- des éléments de régulation (5, 6) configurés pour agir sur l'obturateur (4) afin de réguler le débit du flux de vapeur,
dans lequel
- l'obturateur (4) comprend au moins une première ouverture de régulation (41) et une seconde ouverture de régulation (42) configurées respectivement pour imposer une première valeur de débit (P1) et une seconde valeur de débit (P2) au flux de vapeur, la première valeur de débit (P1) étant différente de la seconde valeur de débit (P2),
- les éléments de régulation (5, 6) sont configurés pour commuter l'obturateur (4) entre au moins une première position de fonctionnement dans laquelle le flux de vapeur traverse la première ouverture de régulation (41) en prenant la première valeur de débit (P1), et une seconde position de fonctionnement dans laquelle le flux de vapeur traverse la seconde ouverture de régulation (42) en prenant la seconde valeur de débit (P2).

2. Appareil (1) selon la revendication 1, dans lequel la première ouverture de régulation (41) et la seconde ouverture de régulation (42) ont une section de passage différente.

3. Appareil (1) selon la revendication 1 ou 2, dans lequel l'obturateur (4) comprend une cavité (40), accessible au moyen d'une ouverture d'entrée (40a), placée en communication fluidique avec la première et la seconde ouverture de régulation (41, 42).

4. Appareil (1) selon la revendication 3, dans lequel :
- la cavité (40) a un axe (X) s'étendant le long d'une direction longitudinale (X-X),
- la première et la seconde ouverture de régulation (41, 42) s'étendent transversalement à la direction longitudinale (X-X).

5. Appareil (1) selon la revendication 4, dans lequel :
- l'obturateur (4) a une surface extérieure (43),
- la première ouverture de régulation (41) et la seconde ouverture de régulation (42) s'étendent transversalement par rapport à la direction longitudinale (X-X) depuis la surface extérieure (43) jusqu'à la cavité (40).

6. Appareil (1) selon la revendication 4 ou 5, dans lequel la première et la seconde ouverture de régulation (41, 42) sont agencées autour de l'axe (X) de la cavité (40).

7. Appareil (1) selon l'une quelconque des revendications précédentes, dans lequel :
- le groupe de régulation (3) comprend un corps principal (7) ayant un siège (70) configuré pour recevoir l'obturateur (4), et une ouverture de décharge (71) placée en communication fluidique avec le dispositif de distribution (2),
- les éléments de régulation (5, 6) sont configurés pour déplacer l'obturateur (4) à l'intérieur du siège (70) du corps principal (7) afin de modifier la position mutuelle de la première et de la seconde ouverture de régulation (41, 42) par rapport à l'ouverture de décharge (71).

8. Appareil (1) selon la revendication 7, dans lequel :
- dans la première position de fonctionnement, la première ouverture de régulation (41) est placée en communication fluidique avec l'ouverture de décharge (71) et la seconde ouverture de régulation (42) est fermée par le corps principal (7),
- dans la seconde position de fonctionnement, la seconde ouverture de régulation (42) est placée en communication fluidique avec l'ouverture de décharge (71) et la première ouverture de régulation (41) est fermée par le corps principal (7).

9. Appareil (1) selon les revendications 7 et 8, dans lequel les éléments de régulation (5, 6) sont configurés pour mettre l'obturateur (4) en rotation à l'intérieur du siège (7) autour d'un axe de régulation (R-R).

10. Machine à café (100) comprenant :
- un générateur de vapeur (C) configuré pour générer un flux de vapeur,
- un appareil (1) de distribution de vapeur selon l'une quelconque des revendications précédentes, l'appareil (1) étant configuré pour recevoir le flux de vapeur du générateur de vapeur (C), réguler le débit dudit flux de vapeur, et distribuer le flux de vapeur dans un récipient (R) contenant un liquide comestible,
- un circuit hydraulique (8) configuré pour mettre le générateur de vapeur (C) en communication fluidique avec l'appareil (1),
- un moyen de vanne (9) agencé le long du circuit hydraulique (8) entre le générateur de vapeur (C) et l'appareil (1), le moyen de vanne (9) étant commutable entre une configuration ouverte dans laquelle il permet l'alimentation du flux de vapeur depuis le générateur de vapeur (C) vers l'appareil (1), et une configuration fermée dans laquelle il interrompt l'alimentation du flux de vapeur depuis le générateur de vapeur (C) vers l'appareil (1).

11. Machine à café (100) selon la revendication 10, comprenant une unité de commande (10) placée en communication de signal avec :
- le groupe de régulation (3) pour commander électroniquement la position de fonctionnement de l'obturateur (4) de manière à réguler le débit de la vapeur distribuée par le dispositif de distribution (2),
- le moyen de vanne (9) pour commuter le moyen de vanne (9) entre la configuration ouverte et la configuration fermée.
